# EUROPEAN PATENT SPECIFICATION

(11) **EP 3 306 897 B1**
(45) Date of publication and mention of the grant of the patent: **19.01.2022**
(21) Application number: 16806736.1
(22) Date of filing: 01.06.2016
(51) Int. Cl.: G06F 16/182, G06F 16/188

(54) **ACCESS METHOD AND APPARATUS**
ZUGANGSVERFAHREN UND -VORRICHTUNG
PROCÉDÉ ET APPAREIL D'ACCÈS

(30) Priority: 08.06.2015 CN 201510309492
(43) Date of publication of application: 11.04.2018
(73) Proprietor: Advanced New Technologies Co., Ltd., George Town, Grand Cayman KY1-9008 (KY)
(72) Inventor: MI, Wenjie, Hangzhou 310099 (CN)
(74) Representative: Fish & Richardson P.C.
(86) International application number: PCT/CN2016/084224
(87) International publication number: WO 2016/197838

(56) References cited:
- CN-A- 101 398 821
- CN-A- 101 459 669
- CN-A- 102 682 129
- CN-A- 103 106 260
- US-A1- 2014 108 755
- US-A1- 2014 344 224
- Anonymous: "Filesystem in Userspace - Wikipedia", , 30 May 2015 (2015-05-30), pages 1-5, XP055530789, Retrieved from the Internet: URL:https://en.wikipedia.org/w/index.php?t itle=Filesystem_in_Userspace&oldid=6647765 14 [retrieved on 2018-12-06]
- Anonymous: "AmigaOS Manual: AmigaDOS Command Reference", , 22 April 2014 (2014-04-22), pages 1-4, XP055671871, Retrieved from the Internet: URL:https://wiki.amigaos.net/w/index.php?t itle=AmigaOS_Manual:_AmigaDOS_Command_Refe rence&oldid=7536#ASSIGN [retrieved on 2020-02-26]
- Anonymous: "AmigaOS Manual: Workbench CrossDOS - AmigaOS Documentation Wiki", , 14 February 2014 (2014-02-14), pages 1-6, XP055737213, Retrieved from the Internet: URL:https://wiki.amigaos.net/w/index.php?t itle=AmigaOS_Manual:_Workbench_CrossDOS&ol did=7210 [retrieved on 2020-10-06]
- Anonymous: "AmigaOS Manual: AmigaDOS Command Reference - AmigaOS Documentation Wiki", , 22 April 2014 (2014-04-22), pages 1-42, XP055737216, Retrieved from the Internet: URL:https://wiki.amigaos.net/w/index.php?t itle=AmigaOS_Manual:_AmigaDOS_Command_Refe rence&oldid=7536#ASSIGN [retrieved on 2020-10-06]

## Description

### Technical Field

The present invention relates to the field of computer technologies, and in particular, to an access method and apparatus.

### Background Art

At present, most enterprises use an NAS (Network Attached Storage) device to store data. A terminal may create an NFS (Network File System) in a path in an operating system of the terminal, and then mount the NAS device in the NFS. When receiving an access request for the NFS, the operating system determines that it is required to access the NAS device, and sends the access request to the NFS, such that the NFS accesses the NAS device through an NFS service. In this way, for the operating system of the terminal, the access mode in which the operating system accesses the NAS device is the same as the access mode in which the operating system accesses a local storage device of the terminal.

However, with the development of science and technology, an amount of data that needs to be stored by enterprises is growing with each passing day. When the amount of data increases, multiple NAS devices need to be configured at the same time to meet the requirements of storage, thus greatly increasing operating costs of the enterprises because configuration of an NAS device is costly.

Therefore, in order to reduce the operating costs, more and more enterprises begin to replace the NAS device with an open-source distributed file system such as an HDFS (Hadoop Distributed File System) or a TFS (TaoBao File System) to store data. However, when an operating system needs to access an open-source distributed file system, the operating system must accesses the open-source distributed file system through an API (Application Programming Interface) provided by the open-source distributed file system.

"Filesystem in Userspace - Wikipedia" 30 May 2015, URL: https:// en.wikipedia.org/w/index.php?title=Filesystem_in_Userspace&oldid=664776514 describes an operating system mechanism for creating a file system without editing kernel code. "AmigaOS Manual: AmigaDOS Command Reference", 22 April 2014, URL: https://wiki.amigaos.net/w/index.php? title=AmigaOS_Manual:_AmigaDOS_Command_Reference&oldid=7536#ASSIGN discloses the "ASSIGN" command with "PATH" option. Using such command, a preset path can be set in advance and linked to a logical drive name. Depending on which physical disk/drive is actually mounted to that logical drive name, once the path is about to be accessed (by an application, by the operating system), the address specified by the assign command on the actually mounted drive associated with the logical drive is accessed (the binding is "re-evaluated").

### Summary of the Invention

The invention is as defined in the claims. To solve existing problems in the related technology, the present invention provides an access method and apparatus.

It should be understood that, the above general description and the following detailed description are merely exemplary and explanatory, and are not intended to limit the present invention.

### Brief Description of the Drawings

The accompanying drawings described herein are incorporated into the present invention and constitute a part of the present invention, which illustrate embodiments consistent with the present invention and are used together with the specification to explain the principle of the present invention.
FIG. 1 is a flowchart of an access method shown according to an exemplary embodiment.
FIG. 2 is a flowchart of an access method shown according to the invention.
FIG. 3 is a flowchart of an access method shown according to an exemplary embodiment.
FIG. 4 is a flowchart of an access method shown according to an exemplary embodiment.
FIG. 5 is a block diagram of an access apparatus shown according to an exemplary embodiment.

### Detailed Description

Exemplary embodiments will be described in detail herein, and examples thereof are shown in the accompanying drawings. In the following description related to the accompanying drawings, identical numerals in different drawings denote identical or similar elements unless otherwise indicated. The implementations described in the following exemplary embodiments do not represent all embodiments consistent with the present application. On the contrary, they are merely examples of apparatuses and methods consistent with some aspects of the present application as detailed in the appended claims.

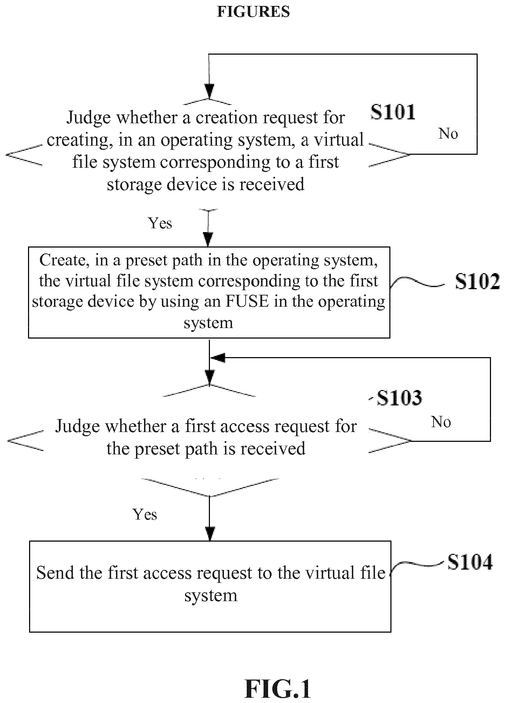

FIG. 1 is a flowchart of an access method shown according to an exemplary embodiment. As shown in FIG. 1, the method includes the following steps.

In step S101, it is judged whether a first creation request for creating, in an operating system, a virtual file system corresponding to a first storage device is received.

The first storage device is an open-source distributed file system such as an HDFS or a TFS. The operating system may be an operating system such as linux.

In the embodiment of the present invention, when needing to access a first storage device, a user may input, into an operating system, a first creation request for creating, in the operating system, a virtual file system corresponding to the first storage device, and submit the first creation request to the operating system. When the operating system receives the first creation request, it is determined to perform step S102.

For example, a user inputs, into the operating system, a creation instruction for creating, in the operating system, the virtual file system corresponding to the first storage device, and submits the creation instruction to the operating system. When the operating system receives the creation instruction, step S102 is performed.

When the creation request is received, in step S102, the virtual file system corresponding to the first storage device is created in a preset path in the operating system by using an FUSE (Filesystem in Userspace) in the operating system.

In the embodiment of the present invention, when the first creation request is received, it is judged whether a network file system corresponding to a second storage device is mounted in the operating system, wherein the second storage device is an NAS device. When the network file system corresponding to the second storage device is mounted in the operating system, a path for mounting, in the operating system, the network file system corresponding to the second storage device is acquired as the preset path. The network file system corresponding to the second storage device and mounted in the operating system is unmounted. Then, the virtual file system corresponding to the first storage device is created in the preset path in the operating system by using the FUSE in the operating system. When the network file system corresponding to the second storage device is not mounted in the operating system, any path that is not occupied in the operating system is taken as the preset path. Afterwards, the virtual file system corresponding to the first storage device is created in the preset path in the operating system by using the FUSE in the operating system.

In step S103, it is judged whether a first access request for the preset path is received.

After the operating system completes creating, in the preset path, the virtual file system corresponding to the first storage device, if the user needs to access the first storage device, the user may input, in the operating system, an access request for accessing the preset path, and submit the access request to the operating system. When the operating system receives the access request, step S104 is performed.

For example, when needing to access the first storage device, the user may input, in the operating system, an access instruction for accessing the preset path, and submit the access instruction to the operating system. When the operating system receives the access instruction, step S104 is performed.

When the first access request for the preset path is received, in step S104, the first access request is sent to the virtual file system.

Thereby, the virtual file system can access the first storage device according to the access request.

In this way, for the operating system, the access mode in which the operating system accesses the first storage device is the same as the access mode in which the operating system accesses a local storage device.

In the embodiment of the present invention shown in FIG. 1, it is judged whether a creation request for creating, in an operating system, a virtual file system corresponding to a first storage device is received; the virtual file system corresponding to the first storage device is created in the operating system by using an FUSE in the operating system when the creation request is received; it is judged whether a first access request for a preset path is received; and the first access request is sent to the virtual file system when the first access request for the preset path is received, such that the virtual file system accesses the first storage device according to the first access request.

In the prior art, the access mode in which an operating system accesses a first storage device through an API interface provided by the first storage device is different from the access mode in which an operating system accesses a second storage device. Skilled persons need to compile in advance, in the operation system, a great number of applications for accessing the first storage device through the API interface provided by the first storage device, thereby causing high labor costs.

However, in the embodiment of the present invention, a virtual file system corresponding to a first storage device is created in an operating system by using an FUSE in the operating system. When it is required to access the first storage device, without accessing the first storage device through an API interface provided by the first storage device, the operating system only needs to send a first access request to the virtual file system such that the virtual file system accesses the first storage device according to the first access request. In this way, for the operating system, the access mode in which the operating system accesses the first storage device is the same as the access mode in which the operating system accesses a local storage device. Because the access mode in which the operating system accesses the second storage device is the same as the access mode in which the operating system accesses the local storage device, the access mode in which the operating system accesses the first storage device is the same as the access mode in which the operating system accesses the second storage device.

Therefore, the operating system can successfully access the first storage device by using an application for originally accessing the second storage device, and it is unnecessary for skilled persons to compile in advance, in the operation system, a great number of applications for accessing the first storage device through the API interface provided by the first storage device, thereby reducing labor costs.

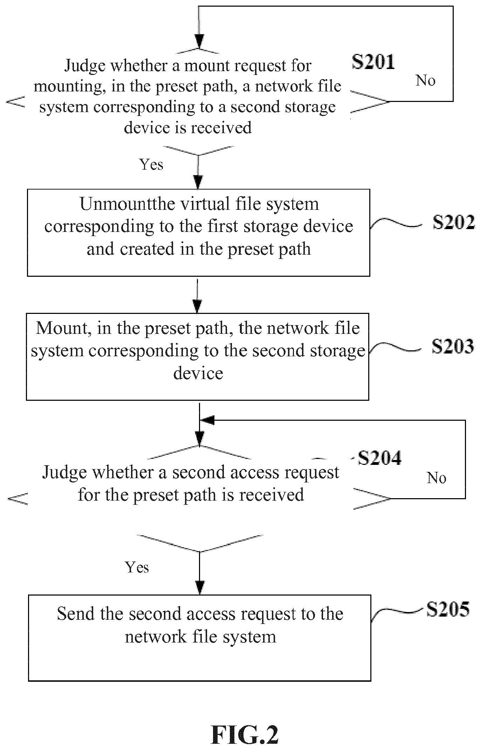

In the invention, referring to FIG. 2, the method further includes the following steps:
In step S201, it is judged whether a mount request for mounting, in a preset path, a network file system corresponding to a second storage device is received.

The second storage device is an NAS device.

In the invention, in order to avoid wasting paths of the operating system, the path for mounting the network file system in the operating system is the same as the path for creating the virtual file system in the operating system. However, in the same path of the operating system, the network file system and the virtual file system cannot exist at the same time.

Therefore, when it is required to access the first storage device, if the network file system corresponding to the second storage device has been mounted in the preset path, the network file system corresponding to the second storage device and mounted in the preset path needs to be unmounted, and then the virtual file system corresponding to the first storage device is created in the preset path, such that the first storage device can be accessed. Moreover, when it is required to access the second storage device, if the virtual file system corresponding to the first storage device is created in the preset path at this time, the virtual file system corresponding to the first storage device and created in the preset path needs to be unmounted, and then the network file system corresponding to the second storage device is mounted in the preset path, such that the second storage device can be accessed.

In the invention, the virtual file system corresponding to the first storage device has been created in the preset path in the operating system. If needing to access the second storage device, a user needs to mount the network file system corresponding to the second storage device in the preset path of the operating system. The user may input, in the operating system, a mount request for mounting, in the preset path of the operating system, a network file system corresponding to a second storage device, and submit the mount request to the operating system. When the operating system receives the mount request, it is determined to perform step S202.

When the mount request is received, in step S202, the virtual file system corresponding to the first storage device and created in the preset path is unmounted;

Because in step S102, the virtual file system corresponding to the first storage device is created in the preset path in the operating system by using the FUSE in the operating system, in this step, a process of the FUSE may be closed, thereby unmounting the virtual file system corresponding to the first storage device and created in the preset path.

In step S203, the network file system corresponding to the second storage device is mounted in the preset path.

For example, an NFS corresponding to the NAS device may be mounted in the preset path.

In step S204, it is judged whether a second access request for the preset path is received.

After the operating system has completely mounted, in the preset path, the network file system corresponding to the second storage device, if the user needs to access the second storage device, the user may input, in the operating system, an access request for accessing the preset path, and submit the access request to the operating system. When the operating system receives the access request, it is determined to perform step S205.

For example, when the user needs to access the second storage device, the user may input, in the operating system, an access instruction for accessing the preset path, and submit the access instruction to the operating system. When the operating system receives the access instruction, it is determined to perform step S205.

When the second access request for the preset path is received, in step S205, the second access request is sent to the network file system.

Thereby, the network file system accesses the second storage device according to the second access request.

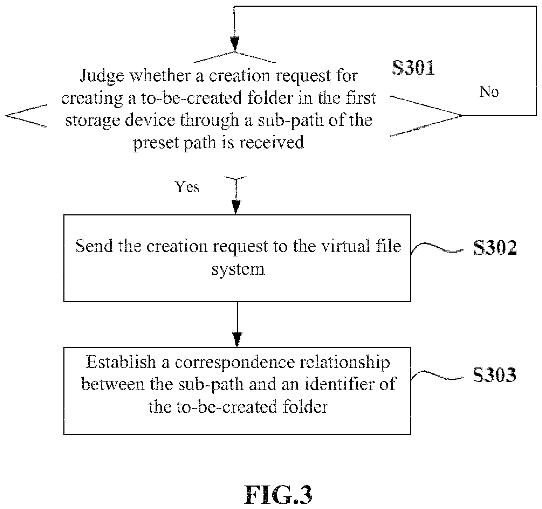

In another embodiment of the present invention, referring to FIG. 3, the method further includes the following steps:
In step S301, it is judged whether a creation request for creating a to-be-created folder in the first storage device through a sub-path of the preset path is received.

The creation request carries an identifier of the to-be-created folder.

When needing to store file content in the first storage device, the user first needs to create a folder in the first storage device, and then store the file content in the created folder. Therefore, when needing to create a folder in the first storage device through a sub-path of the preset path, the user may input, in the operating system, a creation request that is used for creating the to-be-created folder in the first storage device through the sub-path of the preset path and carries the identifier of to-be-created folder; and submit the creation request to the operating system. The operating system receives the creation request, and performs step S302.

The identifier of the folder may be a name, a number, or the like of the folder, which is not limited in the present invention.

When the creation request is received, in step S302, the creation request is sent to the virtual file system, such that the virtual file system creates the to-be-created folder in the first storage device according to the identifier of the to-be-created folder.

The virtual file system receives the creation request, extracts the identifier of the to-be-created folder from the creation request, and then creates the to-be-created folder in the first storage device according to the identifier of the to-be-created folder. In this way, for the operating system, the mode of creating a folder in the first storage device by the operating system is the same as the mode of creating a folder in a local storage device by the operating system. Thereafter, a notification message for notifying creation completion of the to-be-created folder in the first storage device is sent to the operating system. The operating system receives the notification message, and performs step S303.

In step S303, a correspondence relationship between the sub-path and the identifier of the to-be-created folder is established.

Specifically, a correspondence relationship between a preset sub-path and an identifier of a folder is acquired. The sub-path and the identifier of the to-be-created folder are taken as a record, and the record is stored in the correspondence relationship between the preset sub-path and the identifier of the folder, to establish the correspondence relationship between the sub-path and the identifier of the to-be-created folder.

The correspondence relationship between the preset sub-path and the identifier of the folder may be stored in a shared device, such that another operating system may also acquire, from the shared device, the correspondence relationship between the preset sub-path and the identifier of the folder.

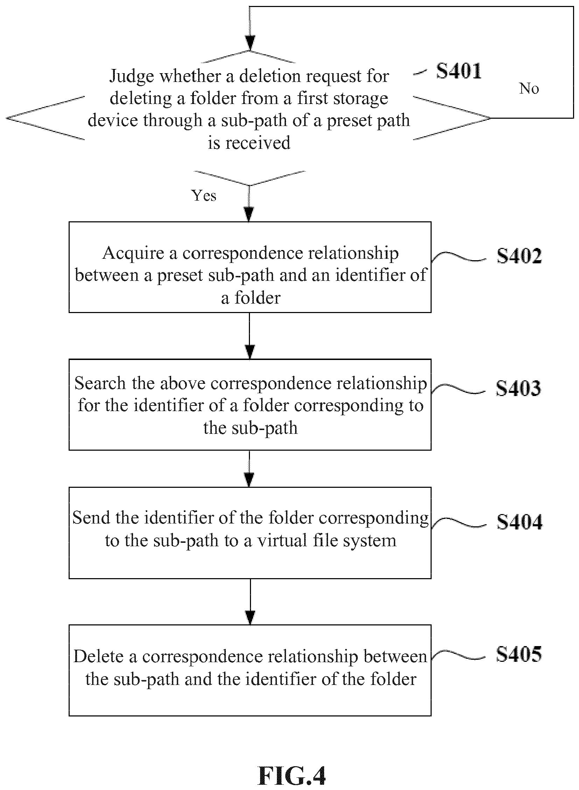

In yet another embodiment of the present invention, referring to FIG. 4, the method further includes the following steps:
In step S401, it is judged whether a deletion request for deleting a folder from a first storage device through a sub-path of a preset path is received.

When needing to delete the folder from the first storage device through a sub-path of the preset path, the user may input, in the operating system, a deletion instruction for deleting the folder from the first storage device through the sub-path of the preset path, and submit the deletion instruction to the operating system. The operating system receives the deletion instruction, and performs step S402.

When the deletion request is received, in step S402, a correspondence relationship between a preset sub-path and an identifier of a folder is acquired.

The identifier of the folder may be a name, a number, or the like of the folder, which is not limited in the present invention.

In step S403, the above correspondence relationship is searched for the identifier of a folder corresponding to the sub-path.

A record including the sub-path is acquired from the above correspondence relationship, and the identifier of the folder is acquired from the record.

In step S404, the identifier of the folder corresponding to the sub-path is sent to a virtual file system, such that the virtual file system deletes a folder corresponding to the identifier of the folder from the first storage device.

The virtual file system receives the identifier of the folder, and deletes the folder corresponding to the identifier of the folder from the first storage device. In this way, for the operating system, the deletion mode in which the operating system deletes the folder from the first storage device is the same as the deletion mode in which the operating system deletes the folder from a local storage device. Thereafter, a notification message for notifying completion of deleting the folder corresponding to the identifier of the folder from the first storage device is sent to the operating system.The operating system receives the notification message, and step S405 is performed.

In step S405, a correspondence relationship between the sub-path and the identifier of the folder is deleted.

Specifically, a record including the identifier of the folder is deleted from the correspondence relationship between a preset sub-path and an identifier of a folder, to delete the correspondence relationship between the sub-path and the identifier of the folder.

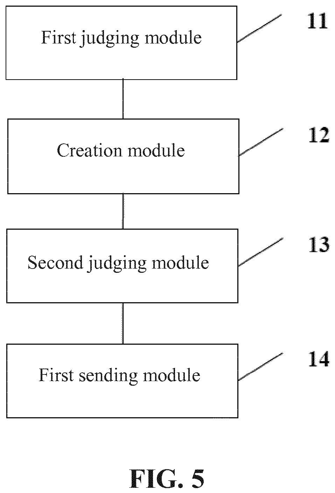

FIG. 5 is a block diagram of an access apparatus shown according to an exemplary embodiment. Referring to FIG. 5, the apparatus includes:
a first judging module 11 configured to judge whether a first creation request for creating, in an operating system, a virtual file system corresponding to a first storage device is received;
a creation module 12 configured to create, in a preset path in the operating system, the virtual file system corresponding to the first storage device by using a Filesystem in Userspace (FUSE) in the operating system when the first creation request is received;
a second judging module 13 configured to judge whether a first access request for the preset path is received; and
a first sending module 14 configured to send the first access request to the virtual file system when the first access request for the preset path is received, such that the virtual file system accesses the first storage device according to the first access request.

In the embodiment of the present invention shown in FIG. 5, it is judged whether a creation request for creating, in an operating system, a virtual file system corresponding to a first storage device is received; the virtual file system corresponding to the first storage device is created in the operating system by using an FUSE in the operating system when the creation request is received; it is judged whether a first access request for a preset path is received; and the first access request is sent to the virtual file system when the first access request for the preset path is received, such that the virtual file system accesses the first storage device according to the first access request.

In the prior art, the access mode in which an operating system accesses a first storage device through an API interface provided by the first storage device is different from the access mode in which an operating system accesses a second storage device. Skilled persons need to compile in advance, in the operation system, a great number of applications for accessing the first storage device through the API interface provided by the first storage device, thereby causing high labor costs.

However, in the embodiment of the present invention, a virtual file system corresponding to a first storage device is created in an operating system by using an FUSE in the operating system. When it is required to access the first storage device, without accessing the first storage device through an API interface provided by the first storage device, the operating system only needs to send a first access request to the virtual file system such that the virtual file system accesses the first storage device according to the first access request. In this way, for the operating system, the access mode in which the operating system accesses the first storage device is the same as the access mode in which the operating system accesses a local storage device. Because the access mode in which the operating system accesses the second storage device is the same as the access mode in which the operating system accesses the local storage device, the access mode in which the operating system accesses the first storage device is the same as the access mode in which the operating system accesses the second storage device.

Therefore, the operating system can successfully access the first storage device by using an application for originally accessing the second storage device, and it is unnecessary for skilled persons to compile in advance, in the operation system, a great number of applications for accessing the first storage device through the API interface provided by the first storage device, thereby reducing labor costs.

Further, the apparatus further includes:
a third judging module configured to judge whether a network file system corresponding to a second storage device is mounted in the operating system;
a first acquisition module configured to acquire a path that is in the operating system and for mounting the network file system corresponding to the second storage device as a preset path when the network file system corresponding to the second storage device is mounted in the operating system; and
a first unmounting module configured to unmount the network file system corresponding to the second storage device and mounted in the operating system;
wherein the creation module is further configured to perform the step of creating, in a preset path in the operating system, the virtual file system corresponding to the first storage device by using the Filesystem in Userspace (FUSE) in the operating system.

Further, the apparatus further includes:
a fourth judging module configured to judge whether a mount request for mounting, in the preset path, the network file system corresponding to the second storage device is received;
a second unmounting module configured to unmount the virtual file system corresponding to the first storage device and created in the preset path, when the mount request is received;
a mounting module configured to mount, in the preset path, the network file system corresponding to the second storage device;
a fifth judging module configured to judge whether a second access request for the preset path is received; and
a second sending module configured to send the second access request to the network file system when the second access request for the preset path is received, such that the network file system accesses the second storage device according to the second access request.

Further, the apparatus further includes:
a sixth judging module configured to judge whether a second creation request for creating a to-be-created folder in the first storage device through a sub-path of the preset path is received, the second creation request carrying an identifier of the to-be-created folder;
a third sending module configured to send the second creation request to the virtual file system when the second creation request is received, such that the virtual file system creates the to-be-created folder in the first storage device according to the identifier of the to-be-created folder; and
an establishment module configured to establish a correspondence relationship between the sub-path and the identifier of the to-be-created folder.

Further, the apparatus further includes:
a seventh judging module configured to judge whether a deletion request for deleting a folder from the first storage device through a sub-path of the preset path is received;
a second acquisition module configured to acquire a correspondence relationship between a preset sub-path and an identifier of a folder when the deletion request is received;
a search module configured to search the correspondence relationship for the identifier of a folder corresponding to the sub-path;
a fourth sending module configured to send the identifier of the folder corresponding to the sub-path to the virtual file system, such that the virtual file system deletes the folder corresponding to the identifier of the folder from the first storage device; and
a deletion module configured to delete the correspondence relationship between the sub-path and the identifier of the folder.

As for the apparatus in the above embodiments, a specific manner of performing operations by each module has been described in detail in the embodiments of the method, so the details are not illustrated herein.

Those skilled in the art can easily conceive other example solutions of the present invention after considering the specification and practicing the invention disclosed herein. The present application is intended to cover any variations, usages, or adaptations of the present invention. These variations, usages, or adaptations abide by general principles of the present invention, and include common knowledge or conventional technical means in the art not disclosed in the present application The specification and embodiments are regarded to be illustrative only, and the real scope of the present invention are indicated by the following claims.

## Claims

1. An access method, comprising:
receiving (S101) a first creation request for creating, in an operating system, a virtual file system corresponding to a first storage device, the first storage device being an open-source distributed file system;
when the first creation request is received
a) judging whether a network file system corresponding to a second storage device is mounted in the operating system, wherein the second storage device is a network attached storage,
b) if the network file system corresponding to the second storage device is mounted in the operation system, acquiring a path in the operating system as a preset path, wherein the network file system corresponding to the second storage device is mounted at the path, and
c) unmounting the network file system corresponding to the second storage device that is mounted in the operating system;
creating (S102), in the preset path in the operating system, the virtual file system corresponding to the first storage device using Filesystem in Userspace in the operating system when the first creation request is received ;
receiving a first access request for the preset path to access the first storage device (S103);
sending, by the operating system, the first access request to the virtual file system when the first access request for the preset path is received, wherein the operating system accesses the first storage device by using an application for originally accessing the second storage device through the preset path such that the virtual file system accesses the first storage device according to the first access request and in the same access mode in which the operating system accesses a local storage device.

2. The method of claim 1, further comprising:
judging whether a mount request for mounting, in the preset path, the network file system corresponding to the second storage device is received;
unmounting the virtual file system corresponding to the first storage device and created in the preset path, when the mount request is received;
mounting, in the preset path, the network file system corresponding to the second storage device;
judging whether a second access request for the preset path is received; and
sending the second access request to the network file system when the second access request for the preset path is received, such that the network file system accesses the second storage device according to the second access request.

3. The method of claim 1, further comprising:
judging whether a second creation request for creating a to-be-created folder in the first storage device through a sub-path of the preset path is received, the second creation request carrying an identifier of the to-be-created folder;
sending the second creation request to the virtual file system when the second creation request is received, such that the virtual file system creates the to-be-created folder in the first storage device according to the identifier of the to-be-created folder; and
establishing a correspondence relationship between the sub-path and the identifier of the to-be-created folder.

4. The method of claim 1, further comprising:
judging whether a deletion request for deleting a folder from the first storage device through a sub-path of the preset path is received;
acquiring a correspondence relationship between a preset sub-path and an identifier of a folder when the deletion request is received;
searching the correspondence relationship for the identifier of a folder corresponding to the sub-path;
sending the identifier of the folder corresponding to the sub-path to the virtual file system, such that the virtual file system deletes the folder corresponding to the identifier of the folder from the first storage device; and
deleting the correspondence relationship between the sub-path and the identifier of the folder.

5. An access apparatus comprising a plurality of modules configured to perform the method of any one of claims 1 to 4.

## Patentansprüche

1. Zugriffsverfahren, das Folgendes umfasst:
Empfangen (S101) einer ersten Erzeugungsanforderung zum Erzeugen in einem Betriebssystem eines virtuellen Dateisystems, das einer ersten Speichervorrichtung entspricht, wobei die erste Speichervorrichtung ein quelloffenes verteiltes Dateisystem ist;
wenn die erste Erzeugungsanforderung empfangen wird
a) Beurteilen, ob ein Netz-Dateisystem, das einer zweiten Speichervorrichtung entspricht, in dem Betriebssystem gemountet ist, wobei die zweite Speichervorrichtung ein mit einem Netz verbundener Speicher ist,
b) falls das Netz-Dateisystem, das der zweiten Speichervorrichtung entspricht, in dem Betriebssystem gemountet ist, Erfassen eines Pfades in dem Betriebssystem als einen vorgegebenen Pfad, wobei das Netz-Dateisystem, das der zweiten Speichervorrichtung entspricht, an den Pfad gemountet ist, und
c) Unmounten des Netz-Dateisystems, das der zweiten Speichervorrichtung entspricht, das in dem Betriebssystem gemountet ist;
Erzeugen (S102) in dem vorgegebenen Pfad in dem Betriebssystem des virtuellen Dateisystems, das der ersten Speichervorrichtung entspricht, unter Verwendung eines Dateisystems im Anwenderraum in dem Betriebssystem, wenn die erste Erzeugungsanforderung empfangen wird;
Empfangen einer ersten Zugriffsanforderung für den vorgegebenen Pfad, um auf die erste Speichervorrichtung zuzugreifen (S103);
Senden durch das Betriebssystem der ersten Zugriffsanforderung an das virtuelle Dateisystem, wenn die erste Zugriffsanforderung für den vorgegebenen Pfad empfangen wird, wobei das Betriebssystem unter Verwendung einer Anwendung zum ursprünglichen Zugreifen auf die zweite Speichervorrichtung durch den vorgegebenen Pfad auf die erste Speichervorrichtung zugreift, so dass das virtuelle Dateisystem gemäß der ersten Zugriffsanforderung und in der gleichen Zugriffsbetriebsart, in der das Betriebssystem auf eine lokale Speichervorrichtung zugreift, auf die erste Speichervorrichtung zugreift.

2. Verfahren nach Anspruch 1, das ferner Folgendes umfasst:
Beurteilen, ob eine Mount-Anforderung zum Mounten in dem vorgegebenen Pfad des Netz-Dateisystems, das der zweiten Speichervorrichtung entspricht, empfangen wird;
Unmounten des virtuellen Dateisystems, das der ersten Speichervorrichtung entspricht und das in dem vorgegebenen Pfad erzeugt ist, wenn die Mount-Anforderung empfangen wird;
Mounten in dem vorgegebenen Pfad des Netz-Dateisystems, das der zweiten Speichervorrichtung entspricht;
Beurteilen, ob eine zweite Zugriffsanforderung für den vorgegebenen Pfad empfangen wird; und
Senden der zweiten Zugriffsanforderung an das Netz-Dateisystem, wenn die zweite Zugriffsanforderung für den vorgegebenen Pfad empfangen wird, so dass das Netz-Dateisystem gemäß der zweiten Zugriffsanforderung auf die zweite Speichervorrichtung zugreift.

3. Verfahren nach Anspruch 1, das ferner Folgendes umfasst:
Beurteilen, ob eine zweite Erzeugungsanforderung zum Erzeugen eines zu erzeugenden Ordners in der ersten Speichervorrichtung durch einen Unterpfad des vorgegebenen Pfads empfangen wird, wobei die zweite Erzeugungsanforderung eine Kennung des zu erzeugenden Ordners überträgt;
Senden der zweiten Erzeugungsanforderung an das virtuelle Dateisystem, wenn die zweite Erzeugungsanforderung empfangen wird, so dass das virtuelle Dateisystem den zu erzeugenden Ordner in der ersten Speichervorrichtung gemäß der Kennung des zu erzeugenden Ordners erzeugt; und
Herstellen einer Übereinstimmungsbeziehung zwischen dem Unterpfad und der Kennung des zu erzeugenden Ordners.

4. Verfahren nach Anspruch 1, das ferner Folgendes umfasst:
Beurteilen, ob eine Löschanforderung zum Löschen eines Ordners aus der ersten Speichervorrichtung durch einen Unterpfad des vorgegebenen Pfads empfangen wird;
Erfassen einer Übereinstimmungsbeziehung zwischen einem vorgegebenen Unterpfad und einer Kennung eines Ordners, wenn die Löschanforderung empfangen wird;
Suchen der Übereinstimmungsbeziehung für die Kennung eines Ordners, der dem Unterpfad entspricht;
Senden der Kennung des Ordners, der dem Unterpfad entspricht, an das virtuelle Dateisystem, so dass das virtuelle Dateisystem den Ordner, der der Kennung des Ordners entspricht, aus der ersten Speichervorrichtung löscht; und
Löschen der Übereinstimmungsbeziehung zwischen dem Unterpfad und der Kennung des Ordners.

5. Zugriffsvorrichtung, die mehrere Module umfasst, die dafür ausgelegt sind, das Verfahren nach einem der Ansprüche 1 bis 4 auszuführen.

## Revendications

1. Procédé d'accès comprenant les étapes suivantes :
recevoir (S101) une première demande de création pour créer, dans un système d'exploitation, un système de fichiers virtuel correspondant à un premier dispositif de stockage, le premier dispositif de stockage étant un système de fichiers distribué de type libre ;
lorsque la première demande de création est reçue :
a) juger si un système de fichiers réseau correspondant à un second dispositif de stockage est monté dans le système d'exploitation, où le second dispositif de stockage est un stockage rattaché au réseau,
b) si le système de fichiers réseau correspondant au second dispositif de stockage est monté dans le système d'exploitation, acquérir un chemin dans le système d'exploitation comme chemin prédéfini, où le système de fichiers réseau correspondant au second dispositif de stockage est monté au niveau du chemin, et
c) démonter le système de fichiers réseau correspondant au second dispositif de stockage qui est monté dans le système d'exploitation ;
créer (S102), dans le chemin prédéfini dans le système d'exploitation, le système de fichiers virtuel correspondant au premier dispositif de stockage en utilisant Filesystem in Userspace dans le système d'exploitation lorsque la première demande de création est reçue ;
recevoir une première demande d'accès au chemin prédéfini pour accéder au premier dispositif de stockage (S103) ;
envoyer, par le système d'exploitation, la première demande d'accès au système de fichiers virtuel lorsque la première demande d'accès pour le chemin prédéfini est reçue, où le système d'exploitation accède au premier dispositif de stockage en utilisant une application pour accéder initialement au second dispositif de stockage par le chemin prédéfini de manière à ce que le système de fichiers virtuel accède au premier dispositif de stockage selon la première demande d'accès et dans le même mode d'accès que celui dans lequel le système d'exploitation accède à un dispositif de stockage local.

2. Procédé selon la revendication 1, comprenant en outre les étapes suivantes :
juger si une demande de montage pour monter, dans le chemin prédéfini, le système de fichiers réseau correspondant au second dispositif de stockage est reçue ;
démonter le système de fichiers virtuel correspondant au premier dispositif de stockage et créé dans le chemin prédéfini, lorsque la demande de montage est reçue ;
monter, dans le chemin prédéfini, le système de fichiers réseau correspondant au second dispositif de stockage ;
juger si une seconde demande d'accès pour le chemin prédéfini est reçue ; et
envoyer la seconde demande d'accès au système de fichiers réseau lorsque la seconde demande d'accès pour le chemin prédéfini est reçue, de manière à ce que le système de fichiers réseau accède au second dispositif de stockage conformément à la seconde demande d'accès.

3. Procédé selon la revendication 1, comprenant en outre les étapes suivantes :
juger si une seconde demande de création pour créer un dossier à créer dans le premier dispositif de stockage par le biais d'un sous-chemin du chemin prédéfini est reçue, la seconde demande de création portant un identifiant du dossier à créer ;
envoyer la seconde demande de création au système de fichiers virtuel lorsque la seconde demande de création est reçue, de manière à ce que le système de fichiers virtuel crée le dossier à créer dans le premier dispositif de stockage en fonction de l'identifiant du dossier à créer ; et
établir une relation de correspondance entre le sous-chemin et l'identifiant du dossier à créer.

4. Procédé selon la revendication 1, comprenant en outre les étapes suivantes :
juger si une demande de suppression d'un dossier du premier dispositif de stockage par le biais d'un sous-chemin du chemin prédéfini est reçue ;
acquérir une relation de correspondance entre un sous-chemin prédéfini et un identifiant d'un dossier lorsque la demande de suppression est reçue ;
rechercher dans la relation de correspondance l'identifiant d'un dossier correspondant au sous-chemin ;
envoyer l'identifiant du dossier correspondant au sous-chemin au système de fichiers virtuel, de manière à ce que le système de fichiers virtuel supprime le dossier correspondant à l'identifiant du dossier du premier dispositif de stockage ; et
supprimer la relation de correspondance entre le sous-chemin et l'identifiant du dossier.

5. Appareil d'accès comprenant une pluralité de modules configurés pour exécuter le procédé de l'une quelconque des revendications 1 à 4.
